(19)

Europäisches Patentamt

European Patent Office

Office européen des brevets

(11) **EP 3 023 469 A1**

(12) **EUROPEAN PATENT APPLICATION**

(43) Date of publication:
**25.05.2016 Bulletin 2016/21**

(51) Int Cl.:
**C09J 7/02** (2006.01)

(21) Application number: **15194668.8**

(22) Date of filing: **16.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.11.2014 JP 2014234031**
**29.07.2015 JP 2015149855**

(71) Applicant: **NITTO DENKO CORPORATION**
**Ibaraki-shi, Osaka 567-8680 (JP)**

(72) Inventors:
• YAMAMOTO, Yasunori
  **Ibaraki-shi, Osaka 567-8680 (JP)**
• IGARASHI, Takeshi
  **Ibaraki-shi, Osaka 567-8680 (JP)**

(74) Representative: **Grünecker Patent- und**
**Rechtsanwälte**
**PartG mbB**
**Leopoldstraße 4**
**80802 München (DE)**

(54) **PRESSURE-SENSITIVE ADHESIVE SHEET**

(57) This invention provides a PSA sheet having excellent fog preventability and rough surface conformability. Provided is a PSA sheet that comprises a substrate and a PSA layer provided on one face of the substrate. The PSA layer has an adhesive face that exhibits a 180° peel strength of 0.30 N/20mm or greater to a polypropylene rough surface. The PSA sheet also shows a fog preventability of 80 % or greater in the glass fogging test.

[Fig. 1]

**Description**

CROSS-REFERENCE

The present application claims priority to Japanese Patent Application No. 2014-234031 filed on November 18, 2014, the entire contents of which are incorporated herein by reference.

BACKGROUND OF THE INVENTION

1. Field of the Invention

The present invention relates to a pressure-sensitive adhesive sheet. In particular, it relates to a pressure-sensitive adhesive sheet suitable as a surface protection sheet to protect a surface of an article from damage such as scratches and dirt.

2. Description of the Related Art

In processing and transporting various articles, for preventing damage (scratches, dirt, etc.) to their surfaces, there are known techniques where pressure-sensitive adhesive sheets are applied to the surfaces for protection. A pressure-sensitive adhesive sheet (surface protection sheet) used for this purpose is generally constructed to have pressure-sensitive adhesive (PSA) on one face of a resinous substrate sheet and achieves the protection purpose upon adhesion via its PSA layer to an adherend (object of protection). For instance, to prevent damage to automobile interior materials, surface protection sheets thus constructed are preferably used. Prior art documents disclosing this type of conventional art include Japanese Patent Application Publication Nos. 2012-031420, 2006-152128, and 2006-70242. Japanese Patent Application Publication No. 2013-521378 discloses a surface protection sheet applied to an adherend having a rough surface.

SUMMARY OF THE INVENTION

In general, a PSA sheet used as a surface protection sheet is applied to an adhered for temporal time including periods that require protection of the adherend (e.g. periods for the processing, transport, etc.). After the protection purpose is served, it is eliminated (removed) from the adherend. From a PSA sheet used in such an embodiment, to protect an adherend surface while in use, it is required to have properties to adhere well and conform to the adherend. However, with respect to conventional surface protection sheets such as those disclosed in Japanese Patent Application Publication Nos. 2012-031420, 2006-152128, and 2006-70242, while they may exhibit good conformability to interior materials having smooth surfaces, their conformability has not been sufficient to rough surfaces (e.g. a rough surface formed of a low polar resin). From a PSA sheet applied to protect, for instance, surfaces of automobile interior materials, in addition to the conformability, fog preventability (fog-preventing properties) are also required. The fog preventability refers to inhibition or prevention of fog on a surface of glass such as of a front windshield and the like caused by deposit of volatiles from the PSA sheet on the surface.

The present invention has been made in view of these circumstances. An objective thereof is to provide a PSA sheet having excellent fog preventability and also excellent rough surface conformability.

[Solution to Problem]

The present invention provides a PSA sheet comprising a substrate and a PSA layer provided on one face of the substrate. The PSA layer has an adhesive face that exhibits a 180° peel strength of 0.30 N/20mm or greater to a polypropylene rough surface. The PSA sheet shows a fog preventability of 80 % or greater in a glass fogging test described below.

[Glass Fogging test]

A circular PSA sheet specimen of 80 mm diameter is placed in a glass vial having an opening of 85 mm inner diameter, a bottom of 80 mm inner diameter and a height of 190 mm. The glass vial containing the PSA sheet specimen is placed in an oil bath (150 mm oil depth) at 100 °C. The opening of the glass vial is covered with a glass plate; and with a weight placed on the glass plate, it is left standing for two hours. Before and after left standing, the reflectance of the glass plate is measured to determine the fog preventability by an equation:

$$\text{Fog preventability (\%)} = \text{(Reflectance of glass plate after left}$$

$$\text{standing)/(Reflectance of glass plate before left standing)} \times 100$$

With such constitution, a PSA sheet having great fog preventability and rough surface conformability is obtained. In this description, the rough surface conformability refers to an ability to conform to a rough surface when adhered to the rough surface and to endure a load acting in the direction to peel it from the adherend.

In a preferable embodiment of the PSA sheet disclosed herein, the PSA layer is an acrylic PSA layer comprising an acrylic polymer as a base polymer. The use of the acrylic PSA layer as the PSA layer preferably brings about a composition that combines a fog preventability and rough surface conformability.

In a preferable embodiment of the PSA sheet disclosed herein, the base polymer in the PSA layer has a glass transition temperature of -40 °C or lower. The use of the base polymer whose glass transition temperature (Tg) is at or below the prescribed value increases the rough surface conformability

In a preferable embodiment of the PSA sheet disclosed herein, a PSA composition used for forming the PSA layer comprises a crosslinking agent. The use of the crosslinking agent increases the cohesion of the PSA layer.

In a preferable embodiment of the PSA sheet disclosed herein, the PSA layer comprises a tackifier having a softening point of 100 °C or higher. The use of the tackifier whose softening point is at or above 100 °C allows it to maintain great fog preventability while bringing about an increase in rough surface conformability

In a preferable embodiment of the PSA sheet disclosed herein, the PSA layer has a thickness of 3 $\mu$m to 30 $\mu$m. The PSA sheet with the PSA layer having a thickness in this range exhibits greater rough surface conformability while providing excellent handling properties.

In a preferable embodiment of the PSA sheet disclosed herein, the substrate has a thickness of 20 $\mu$m to 100 $\mu$m. The PSA sheet with the substrate having a thickness in this range provides excellent protection for the adherend while providing excellent handling properties.

In a preferable embodiment of the PSA sheet disclosed herein, the PSA sheet is used as a surface protection sheet. Accordingly, the art disclosed herein provides a surface protection sheet comprising a substrate and a PSA layer provided on one face of the substrate. Because the PSA sheet is excellent in fog preventability and rough surface conformability, it is preferably used as a rough surface protection sheet (e.g. a protection sheet for a rough surface formed of a low polar resin).

In a preferable embodiment of the PSA sheet disclosed herein, the PSA sheet is used for protecting an automobile interior material. Accordingly, the art disclosed herein provides a surface protection sheet for automobile interior materials.

BRIEF DESCRIPTION OF THE DRAWINGS

Fig. 1 shows a schematic cross-sectional view of an embodiment of the PSA sheet.
Fig. 2 shows a diagram schematically illustrating a peel test method.

DETAILED DESCRIPTION OF THE INVENTION

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

<Construction of PSA Sheet>

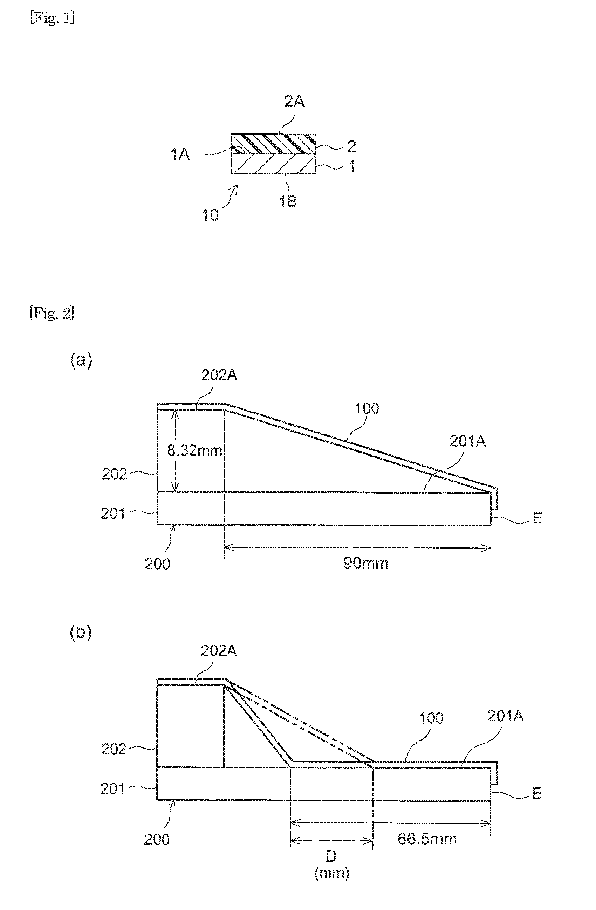

The PSA sheet disclosed herein comprises a substrate (support substrate) sheet and a PSA layer placed over the substrate. Fig. 1 shows a cross-sectional construction of an embodiment of the PSA sheet. The PSA sheet 10 is constructed in a way that a PSA layer 2 is provided on a first face 1A of a substrate (support substrate) 1, and is used such that a surface 2A of PSA layer 2 is adhered to an adherend. Prior to use (i.e. before adhered to the adherend), PSA sheet 10 may be in an embodiment where the surface 2A (adhesive face, i.e., the surface adhered to the adherend) of PSA layer 2 is protected with a release liner (not shown in the drawing) comprising a release face at least on the PSA layer side. Alternatively, PSA sheet 10 may be in an embodiment where with the second face (back face) 1B of substrate 1 being a release face, PSA sheet 10 is wound in a roll, whereby the back face 1B comes in contact with PSA layer 2 and protects its surface (adhesive face) 2A. The construction of the PSA sheet is not limited to this embodiment and may be in a form of a double-faced PSA sheet comprising a PSA layer on each face of the substrate.

<Properties of PSA Sheet>

The PSA sheet disclosed herein is characterized by exhibiting a fog preventability of 80 % or greater in the glass fogging test described above. By this, when it is used in a closed space, such as inside an automobile, having a surface formed of a transparent material such as glass, it inhibits or prevents fogging of the transparent material caused by volatiles from the PSA sheet. The fog preventability is preferably 85 % or greater, more preferably 90 % or greater, or yet more preferably 92 % or greater (e.g. 94 % or greater, typically 97 % or greater). While the upper limit of fog preventability is ideally 100 %, from a practical point of view, it can be about 99 % or less (e.g. 98 % or less). Specifically, the glass fogging test is carried out according to a method described later in the working examples. The fog preventability can be achieved by adjusting the molecular weight and molecular weight distribution of the base polymer, ratio of low molecular weight component, conversion and the like as well as by selecting the amount of additives used such as tackifier (e.g. ratio of low molecular weight components), properties of the additives (e.g. the softening point of tackifier) and so on.

In addition to the fog preventability described above, the PSA sheet disclosed herein is characterized by exhibiting a 180° peel strength to polypropylene (PP) rough surface (or "PP rough surface peel strength" hereinafter) of 0.30 N/20 mm or greater. The PSA sheet exhibiting such PP rough surface peel strength shows excellent conformability to rough surfaces (e.g. rough surfaces of low polar adherends such as PP). For instance, when the PSA sheet is used as a rough surface protection sheet, it can provide sufficient protection to the rough surface. In particular, because it shows excellent conformability to members such as automobile interior materials having surfaces formed as rough surfaces, it is preferable as a surface protection sheet for these members and the like. The PP rough surface peel strength is preferably 0.5 N/20mm or greater, more preferably 0.6 N/20mm or greater (e.g. 0.7 N/20mm or greater, typically 0.85 N/20mm or greater). From the standpoint of the removability, etc., the PP rough surface peel strength can usually be about 5 N/20mm or less (e.g. 3 N/20mm or less). The PP rough surface peel strength can be measured based on JIS Z0237:2000, using as the adherend a PP plate having a rough surface whose arithmetic mean surface roughness Ra is 10 $\mu$m to 30 $\mu$m (typically 15 $\mu$m $\pm$ 5 $\mu$m). More specifically, it is measured by a method described later in the working examples. In this description, the arithmetic mean surface roughness Ra can be measured over a suitable range (preferably over a 5 mm by 5 mm measurement range), using a general surface roughness gauge (e.g. non-contact three-dimensional surface profilometer under model name "Wyko NT-3300" available from Veeco).

The art disclosed herein combines high levels of fog preventability and rough surface conformability described above. This feature is now described. Fog preventability can be attained typically by limiting the amount of additives used such as tackifier. On the other hand, rough surface conformability usually tends to improve with the use of additives such as tackifier. Thus, fog preventability and rough surface conformability are counteracting properties that are not easily combined. For instance, automobile interior materials such as dashboards and door trims as expected adherends are intentionally formed to have unrefined surfaces (i.e. rough surfaces) and may even include curved surfaces and unevenness. With respect to such adherend surfaces, conventional PSA sheets have not produced satisfactory performance as insufficient conformability has caused them to peel off during periods of protection, etc. In the background, there is a unique circumstance of this application, where the use of additives such as tackifier is limited because a certain level of fog preventability can be required of PSA sheets applied for surface protection of automobile interior materials as those described above. In addition, it is reminded that when a PSA sheet is used as a surface protection sheet, because the protection sheet is removed from the adherend surface after completion of the protection period, removability is also required, such as not to leave adhesive residue. With respect to such a novel issue, the present inventors have examined the molecular design (typically the monomer composition) of the base polymer and the composition of the PSA composition in all manners and have made the PSA sheet capable of bringing about excellent fog preventability and rough surface conformability In particular, in the working examples described later, various investigations were conducted on the monomer composition of acrylic polymer as well as on the types and amounts of additives such as crosslinking agent and tackifier, etc. However, a person skilled in the art who thoroughly inspects the entire disclosure of this description will understand that the art disclosed herein is not limited to the compositions of the working examples.

<PSA Layer>

(Base Polymer)

The PSA layer disclosed herein may comprise, as its base polymer, one, two or more species among various polymers including acrylic polymers, rubber-based polymers, polyester-based polymers, urethane-based polymers, polyether-based polymers, silicone-based polymers, polyamide-based polymers, fluorine-based polymers, and the like that are commonly known in the field of PSA. From the standpoint of the adhesive properties, costs, etc., an acrylic polymer can be preferably used.

The "base polymer" of a PSA refers to the primary component among rubber-based polymers in the PSA. The rubber-based polymer refers to a polymer that exhibits rubber elasticity in a near-room-temperature range. The "primary component" in this description refers to a component exceeding 50 % by weight of the content, unless otherwise indicated.

The term "acrylic polymer" refers to a polymer comprising, as a monomeric unit constituting the polymer, a monomeric unit derived from a monomer having at least one (meth)acryloyl group per molecule. In the following, a monomer having at least one (meth)acryloyl group per molecule may be called an "acrylic monomer." The acrylic polymer in this description is defined as a polymer comprising a monomeric unit derived from an acrylic monomer. Atypical example of such acrylic polymer is an acrylic polymer in whose monomer composition, the acrylic monomer content exceeds 50 % by weight of all monomers used in synthesizing the acrylic polymer.

The term "(meth)acryloyl" comprehensively refers to acryloyl and methacryloyl. Similarly, the terms "(meth)acrylate" and "(meth)acryl" comprehensively refer to acrylate and methacrylate, and acryl and methacryl, respectively.

(Acrylic Polymer)

As the acrylic polymer, for example, a polymer of a monomeric starting material comprising an alkyl (meth)acrylate as the primary monomer and possibly comprising a secondary monomer copolymerizable with the primary monomer is preferable. The primary monomer herein is a monomer with the highest content in the monomer composition of the monomeric starting material, referring to, for instance, a component accounting for at least 50 % by weight of the monomer composition.

As the alkyl (meth)acrylate, for instance, a compound represented by the following formula (1) can preferably be used:

$$CH_2=C(R^1)COOR^2 \qquad (1)$$

Herein, $R^1$ in the formula (1) is a hydrogen atom or a methyl group. $R^2$ is an acyclic alkyl group having 1 to 20 carbon atoms (hereinafter, such a range of the number of carbon atoms may be indicated as "$C_{1-20}$"). From the standpoint of the storage elastic modulus of PSA, etc., an alkyl (meth)acrylate with $R^2$ being a $C_{1-14}$ (e.g. $C_{1-10}$, typically $C_{2-8}$) acyclic alkyl group is preferable. From the standpoint of combining rough surface conformability and removability, an alkyl acrylate with $R^1$ being a hydrogen atom and $R^2$ being a $C_{4-8}$ acyclic alkyl group (or simply a $C_{4-8}$ alkyl acrylate hereinafter) is more preferable.

Examples of an alkyl (meth)acrylate with $R^2$ being a $C_{1-20}$ acyclic alkyl group include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, pentyl (meth)acrylate, isopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, etc. Among these alkyl (meth)acrylates, solely one species or a combination of two or more species can be used. Preferable alkyl (meth)acrylates include n-butyl acrylate (BA) and 2-ethylhexyl acrylate (2EHA). In particular, 2EHA is more preferable.

The ratio of primary monomer (when two or more species of alkyl (meth)acrylate are contained in the monomeric starting material, the combined ratio of the two or more species) to all monomers is preferably 70 % by weight or greater, more preferably 90 % by weight or greater, or yet more preferably 95 % by weight or greater. The upper limit of the ratio of primary monomer is not particularly limited, but is preferably 99.5 % by weight or less (e.g. 99 % by weight or less). Alternatively, the acrylic polymer may be a polymerization product of essentially only the primary monomer. When an $C_{4-8}$ alkyl acrylate is contained as a primary monomer, the $C_{4-8}$ alkyl acrylate content in the primary monomers is preferably 70 % by weight or greater, more preferably 90 % by weight or greater, or yet more preferably 95 % by weight or greater (typically 99 to 100 % by weight). The art disclosed herein can be preferably implemented in an embodiment where 2EHA accounts for 50 % by weight or more (e.g. 70 % by weight or more, typically 90 % by weight or more) of the monomer composition of the monomeric starting material.

The secondary monomer copolymerizable with the alkyl (meth)acrylate being the primary monomer may be useful for introducing crosslinking points in the acrylic polymer or increasing the cohesive strength of the acrylic polymer. As the secondary monomer, for instance, the following functional group-containing monomers can be used singly as one species or in a combination of two or more species:

Carboxy group-containing monomers: for example, ethylenic unsaturated monocarboxylic acids such as acrylic acid (AA), methacrylic acid (MAA), crotonic acid, etc.; ethylenic unsaturated dicarboxylic acids such as maleic acid, itaconic acid, citraconic acid, etc., as well as anhydrides thereof (maleic acid anhydride, itaconic acid anhydride, etc.).

Hydroxy group-containing monomers: for example, hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, etc.; unsaturated alcohols such as vinyl alcohol, allyl alcohol, etc.

Amide group-containing monomers: for example, (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)acrylamide, N-butoxymethyl(meth)acrylamide.

Amino group-containing monomers: for example, aminoethyl (meth)acrylate, N,N-dimethylaminoethyl (meth)acrylate, t-butylaminoethyl (meth)acrylate.

Epoxy group-containing monomers: for example, glycidyl (meth)acrylate, methylglycidyl (meth)acrylate, allyl glycidyl ether.

Cyano group-containing monomers: for example, acrylonitrile, methacrylonitrile

Keto group-containing monomers: for example, diacetone (meth)acrylamide, diacetone (meth)acrylate, vinyl methyl ketone, vinyl ethyl ketone, allyl acetoacetate, vinyl acetoacetate.

Monomers having nitrogen atom-containing rings: for example, N-vinyl-2-pyrrolidone, N-methylvinylpyrrolidone, N-vinylpyridine, N-vinylpiperidone, N-vinylpynmidine, N-vinylpiperazine, N-vinylpyrazine, N-vinylpyrrole, N-vinylimi.dazole, N-vinyloxazole, N-vinylmorpholine, N-vinylcaprolactam, N-(meth)acryloyl morpholine.

Alkoxysilyl group-containing monomers: for example, (3-(meth)acryloxypropyl)trimethoxysilane, (3-(meth)acryloxypropyl)triethoxysilane, (3-(meth)acryloxypropyl)methyldimethoxysilane, (3-(meth)acryloxypropyl)methyldiethoxysilane.

As the secondary monomer, it is preferable to use a carboxy group-containing monomer or hydroxy group-containing monomer that can form a functional group-containing monomer reactive to a crosslinking agent (e.g. an isocyanate-based crosslinking agent or epoxy-based crosslinking agent) that can be in the PSA composition described later. Preferable examples of the carboxy group-containing monomer include AA and MAA. Preferable examples of the hydroxyl group-containing monomer include 2-hydroxyethyl acrylate (HEA) and 4-hydroxybutyl acrylate (4HBA).

The amount of the secondary monomer should just be suitably selected so as to obtain desirable cohesive strength and is not particularly limited. Usually, from the standpoint of combining cohesion and other adhesive properties (e.g. rough surface conformability) in a well-balanced manner, the amount of secondary monomer is suitably at least 0.1 % by weight of all monomers in the acrylic polymer, or preferably 0.5 % by weight or greater (e.g. 1 % by weight or greater). The amount of secondary monomer is suitably at most 30 % by weight of all the monomers, or preferably 10 % by weight or less (e.g. 7 % by weight or less, typically 5 % by weight or less).

When a carboxy group-containing monomer (e.g. AA) is used as the secondary monomer, from the standpoint of preventing adhesive transfer, its content is suitably 0.5 % by weight or more of all monomers of the acrylic polymer or preferably 1 % by weight or more (e.g. 2 % by weight or more). From the standpoint of the adhesion to a low polar adherend, etc., the upper limit of the carboxy group-containing monomer content is suitably 8 % by weight or less of all the monomers, or preferably 6 % by weight or less (e.g. 4 % by weight or less).

For the purpose of increasing the cohesive strength of the acrylic polymer, etc., other co-monomer(s) besides the aforementioned secondary monomers can be used. Examples of such co-monomers include vinyl ester-based monomers such as vinyl acetate, vinyl propionate, etc.; aromatic vinyl compounds such as styrene, substituted styrenes ($\alpha$-methylstyrene, etc.), vinyl toluene, etc.; non-aromatic ring-containing (meth)acrylates such as cycloalkyl (meth)acrylates including cyclohexyl (meth)acrylate, cyclopentyl di(meth)acrylate, isobornyl (meth)acrylate, etc.; aromatic ring-containing (meth)acrylates such as aryl (meth)acrylates (e.g. phenyl (meth)acrylate), aryloxyalkyl (meth)acrylates (e.g. phenoxyethyl (meth)acrylate), arylalkyl (meth)acrylates (e.g. benzyl (meth)acrylate), etc.; olefinic monomers such as ethylene, propylene, isoprene, butadiene, isobutylene, etc.; chlorine-containing monomers such as vinyl chloride, vinylidene chloride, etc.; isocyanate group-containing monomers such as 2-(meth)acryloyloxyethyl isocyanate, etc.; alkoxy group-containing monomers such as methoxyethyl (meth)acrylate, ethoxyethyl (meth)acrylate, etc.; vinyl ether-based monomers such as methyl vinyl ether, ethyl vinyl ether, etc.; and the like. Besides the secondary monomer, these other co-monomers can be used singly as one species or in a combination of two or more species. The amount of such other co-monomer(s) can be suitably selected according to the purpose and intended use, and thus is not particularly limited. For instance, it is suitably 30 % by weight or less of all monomers in the acrylic polymer, preferably 20 % by weight or less (typically 1 to 20 % by weight), or more preferably 15 % by weight or less (typically 5 to 15 % by weight). The art disclosed herein can also be preferably implemented in an embodiment using an acrylic polymer in which essentially no other co-monomers are copolymerized besides the secondary monomer.

In addition, for crosslinking the acrylic polymer, etc., a polyfunctional monomer can be used as a co-monomer. As specific example(s) of the polyfunctional monomer, one, two or more species can be used among hexane diol di(meth)acrylate, polyethylene glycol di(meth)acrylate, polypropylene glycol di(meth)acrylate, neopentyl glycol di(meth)acrylate, pentaerithritol di(meth)acrylate, trimethylol propane tri(meth)acrylate, pentaerithritol tri(meth)acrylate, dipentaerithritol hexa(meth)acrylate, epoxy acrylate, polyester acrylate, urethane acrylate and the like. The amount of the polyfunctional monomer is not particularly limited and can be suitably selected in accordance with the purpose and application. For instance, it is preferably about 30 % by weight or less (e.g. 20 % by weight or less, typically 10 % by weight or less) of the monomer composition of the acrylic polymer. The art disclosed herein can be preferably implemented in an embodiment using an acrylic polymer in which essentially no polyfunctional monomer is copolymerized.

The method for obtaining an acrylic polymer having the aforementioned monomer composition is not particularly limited. Various polymerization methods known as synthetic means for acrylic polymers can be suitably employed, with the methods including a solution polymerization method, emulsion polymerization method, bulk polymerization method, suspension polymerization method, etc. For instance, a solution polymerization method or an emulsion polymerization method can be preferably used. Among them, the solution polymerization method is more preferable. As a method for supplying monomers when carrying out solution polymerization, can be suitably employed an all-at-once supply method to supply all starting monomers at once, continuous (dropwise) supply method, portionwise (dropwise) supply method, etc. The polymerization temperature can be suitably selected depending on the types of monomers and solvent being used, type of polymerization initiator, etc. For example, it can be about 20 °C to 170 °C (typically 40 °C to 140 °C).

The solvent used for solution polymerization can be suitably selected among known or commonly used organic solvents. For instance, one species of solvent or a mixture of two or more species of solvent can be used, selected from aromatic compounds (typically aromatic hydrocarbons) such as toluene, xylene, etc.; carboxylic acid esters (typically alkyl acetates) such as ethyl acetate, butyl acetate, etc.; aliphatic or alicyclic hydrocarbons such as hexane, cyclohexane, methylcyclohexane, etc.; halogenated alkanes such as 1,2-dichloroethane, etc.; lower alcohols (e.g. primary alcohols with one to four carbon atoms) such as isopropanol, 1-butanol, sec-butanol, tert-butanol, etc.; ethers such as tert-butyl methyl ether, etc.; ketones such as methyl ethyl ketone, acetyl acetone, etc.; and the like.

The initiator used for the polymerization can be suitably selected from known or commonly used polymerization initiators in accordance with the type of polymerization method. Examples of the polymerization initiator include azo-based polymerization initiators. Specific examples of azo-based polymerization initiators include 2,2'-azobisisobutylonitrile (AIBN), 2,2'-azobis(2-methylpropionamidine) disulfate, 2,2'-azobis(2-amidinopropane) dihydrochloride, 2,2'-azo-bis[2-(5-methyl-2-imidazoline-2-yl)propane] dihydrochloride, 2,2'-azobis(N,N-dimethylene isobutylamidine), 2,2'-azo-bis[N-(2-carboxyethyl)-2-methylpropionamidine] hydrate, 2,2'-azobis(4-methoxy-2,4-dimethylvaleronitrile), 2,2'-azo-bis(2,4-dimethylvaleronitrile), 2,2'-azobis(2-methylbutyronitrile), 1,1'-azobis(cyclohexane-1-carbonitrile), 2,2'-azo-bis(2,4,4-trimethylpentane), dimethyl-2,2'-azobis(2-methylpropionate), etc.

Other examples of the polymerization initiator include persulfates such as potassium persulfate, ammonium persulfate, etc.; peroxide-based initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, 1,1-bis(t-butylperoxy)cyclododecane, hydrogen peroxide, etc.; substituted ethane-based initiators such as phenyl-substituted ethane, etc.; aromatic carbonyl compounds; and so on. Yet other examples of the polymerization initiator include a redox-based initiator by a combination of a peroxide and a reducing agent. Examples of such redox-based initiator include a combination of a peroxide and ascorbic acid (a combination of hydrogen peroxide and ascorbic acid, etc.), a combination of a peroxide and an iron(II) salt (a combination of hydrogen peroxide and an iron(II) salt, etc.), a combination of a persulfate and sodium hydrogen sulfite, and the like.

These polymerization initiators can be used singly as one species or in a combination of two or more species. The polymerization initiator can be used in a typical amount, selected from a range of, for instance, about 0.005 to 1 part by weight (typically 0.01 to 1 part by weight) relative to 100 parts by weight of the total monomer content.

From the standpoint of combining adhesive strength and removability, the acrylic polymer disclosed herein is preferably designed to have a Tg in a range of -80 °C to -30 °C. From the standpoint of increasing the rough surface conformability, the acrylic polymer is more preferably designed to have a Tg of -40 °C or lower (e.g. -45 °C or lower, typically -50 °C or lower). The lower Tg limit of the acrylic polymer is preferably -75 °C or higher (e.g. -70 °C or higher).

The Tg of the acrylic polymer herein refers to the value determined by the Fox equation based on the Tg values of homopolymers of the respective monomers constituting the polymer and the weight fractions (copolymerization ratio by weight) of the monomers. As shown below, the Fox equation is a relational expression between the Tg of a copolymer and glass transition temperatures Tgi of homopolymers of the respective monomers constituting the copolymer.

$$1/Tg = \Sigma(Wi/Tgi)$$

In the Fox equation, Tg represents the glass transition temperature (unit: K) of the copolymer, Wi represents the weight fraction (copolymerization ratio by weight) of a monomer i in the copolymer, and Tgi represents the glass transition temperature (unit: K) of homopolymer of the monomer i. Accordingly, the acrylic polymer's Tg can be adjusted by suitably modifying the composition of the monomeric starting material (i.e. the types of monomers used in synthesizing the polymer and their usage ratio). As the Tg values of homopolymers, values in a known document are used.

In the art disclosed herein, as the Tg values of the homopolymers, the following values are used specifically:

| | |
|---|---|
| 2-ethylhexyl acrylate | -70 °C |
| n-butyl acrylate | -55 °C |
| ethyl acrylate | -22 °C |
| methyl methacrylate | 105 °C |
| isobutyl methacrylate | 20 °C |
| vinyl acetate | 32 °C |
| 2-hydroxyethyl acrylate | -15 °C |
| acrylic acid | 106 °C |
| methacrylic acid | 228 °C |
| acrylamide | 77 °C |
| cyclohexyl methacrylate | 66 °C |
| dicyclopentanyl methacrylate | 175 °C |

With respect to the Tg values of homopolymers other than those listed above, the values given in "Polymer Handbook" (3rd edition, John Wiley & Sons, Inc., Year 1989) are used.

When no values are given in Polymer Handbook, values obtained by the following measurement method are used (see Japanese Patent Application Publication No. 2007-51271).

In particular, to a reaction vessel equipped with a thermometer, a stirrer, a nitrogen inlet and a condenser, are added 100 parts by weight of monomer(s), 0.2 part by weight of azobisisobutyronitrile, and 200 parts by weight of ethyl acetate as a polymerization solvent, and the mixture is stirred for one hour under a nitrogen gas flow. After oxygen is removed in this way from the polymerization system, the mixture is heated to 63 °C and the reaction is carried out for 10 hours. Then, it is cooled to room temperature and a homopolymer solution having 33 % by weight solid content is obtained. Then, this homopolymer solution is applied onto a release film by flow coating and allowed to dry to prepare a test sample (a homopolymer sheet) of about 2 mm thickness. This test sample is cut out into a disc of 7.9 mm diameter and is placed between parallel plates; and while applying a shear strain at a frequency of 1 Hz using a viscoelasticity testing system (a TA Instruments product, ARES), the viscoelasticity is measured in the shear mode over a temperature range of -70 °C to 150 °C at a heating rate of 5 °C/min; and the temperature value at the maximum of the tan δ curve is taken as the glass transition temperature.

With respect to the base polymer (preferably an acrylic polymer) in the art disclosed herein, when its weight average molecular weight (Mw) is excessively small, the cohesive strength of the PSA becomes insufficient, leading to a tendency to leave adhesive residue on the adherend surface. It may also result in an increased ratio of low molecular weight components, lowering the fog preventability. On the other hand, an excessively large Mw tends to lower the adhesive strength to adherend. To balance adhesive properties and removability at a high level, it is preferable to use a base polymer (preferably an acrylic polymer) having a Mw in a range of $30 \times 10^4$ or large, but $150 \times 10^4$ or smaller. Greater results can be obtained with a base polymer (preferably an acrylic polymer) having an Mw of $35 \times 10^4$ or larger, but $100 \times 10^4$ or smaller (e.g. $40 \times 10^4$ or larger, but $70 \times 10^4$ or smaller). In this description, Mw is a value based on standard polystyrene, obtained by GPC (gel permeation chromatography).

The number average molecular weight (Mn) of the base polymer (preferably an acrylic polymer) is not particularly limited. For the same reason as the Mw, it is preferably in a range of about $1 \times 10^4$ to $100 \times 10^4$ (e.g. $1.5 \times 10^4$ to $30 \times 10^4$, typically $2 \times 10^4$ to $10 \times 10^4$). From the standpoint of bringing about high levels of adhesive properties such as adhesive strength and removability and also from the standpoint of increasing the fog preventability, Mw/Mn is preferably about 30 or less (e.g. 25 or less, typically 20 or less). While the lower limit of Mw/Mn is not particularly limited, it can be about 2 or greater (e.g. 3 or greater). In this description, Mn refers to a value based on standard polystyrene, obtained by GPC.

When the PSA layer disclosed herein comprises an acrylic polymer as the base polymer, it may comprise, in addition to the acrylic polymer, another polymer other than the acrylic polymer. The non-acrylic polymer includes various polymers listed earlier as the base polymer, excluding the acrylic polymers. When the PSA layer disclosed herein comprises the non-acrylic polymer in addition to the acrylic polymer, the non-acrylic polymer content is suitably less than 100 parts by weight (e.g. 50 parts by weight or less, typically 10 parts by weight or less) to 100 parts by weight of the acrylic polymer. The art disclosed herein can be preferably implemented in an embodiment where, for instance, the acrylic polymer accounts for 99.5 to 100 % by weight of the base polymer.

(Acrylic Oligomer)

In a preferable embodiment, the PSA layer comprises an acrylic oligomer. The use of the acrylic oligomer brings about greater adhesive strength and rough surface conformability. The fog preventability of the acrylic oligomer is less likely to decrease as compared with the tackifier resin described later. This means that it can be used in a wider range of amount and it works advantageously in increasing the adhesive strength and rough surface conformability In addition, when the PSA composition is cured by irradiation of active energy rays (e.g. UV rays), the acrylic oligomer is advantageous in that it is less susceptible to hindering of curing (e.g. hindering of polymerization of unreacted monomers) as compared with, for examples, rosin-based and terpene-based tackifier resins. The acrylic oligomer is a polymer comprising an acrylic monomer as its monomeric component and is defined as a polymer having a smaller Mw than the acrylic polymer.

The ratio of acrylic monomer to all monomers constituting the acrylic oligomer is typically greater than 50 % by weight, preferably 60 % by weight or greater, or more preferably 70 % by weight or greater (e.g. 80 % by weight or greater, or even 90 % by weight or greater). In a preferable embodiment, the acrylic oligomer has a monomer composition essentially consisting of an acrylic monomer.

As the monomeric components of the acrylic oligomer, the acyclic alkyl (meth)acrylate, a secondary monomer (typically functional group-containing monomer) and other co-monomers than the secondary monomer, those exemplified as the monomer that can be used for the acrylic polymer, can be used. The monomeric components may include a ring-containing (meth)acrylate such as an alicyclic hydrocarbon group-containing (meth)acrylate or an aromatic ring-containing (meth)acrylate. As the monomer constituting the acrylic oligomer, one, two or more species can be used among various monomers listed as examples above.

As the acyclic alkyl (meth)acrylate, an alkyl (meth)acrylate with $R^2$ in the formula (1) being $C_{1-20}$ can be used. In particular, an alkyl (meth)acrylate with $R^2$ in the formula (1) being $C_{1-12}$ (e.g. $C_{1-8}$) is preferably used. Preferable examples thereof include methyl methacrylate (MMA), ethyl acrylate (EA), n-butyl acrylate (BA), isobutyl methacrylate (IBMA), t-butyl acrylate, and 2-ethylhexyl acrylate (2EHA).

Preferable examples of the functional group-containing monomer include a monomer having a nitrogen atom-containing ring (typically, a nitrogen atom-containing heterocycle) such as N-vinyl-2-pyrrolidone, N-acryloylmorpholine (ACMO), etc.; amino group-containing monomer such as N,N-dimethylaminoethyl (meth)acrylate, etc.; amide group-containing monomer such as (meth)acrylamide, N,N-dimethyl(meth)acrylamide, N,N-diethyl(meth)acrylamide, etc.; carboxy group-containing monomer such as AA, MAA, etc.; hydroxy group-containing monomer such as HEA, etc.; and the like.

When the functional group-containing monomer is used as a monomer constituting the acrylic oligomer, from the standpoint of the adhesion and cohesion, the ratio (i.e. copolymerization ratio) of functional group-containing monomer to all monomers constituting the acrylic oligomer is preferably about 20 % by weight or less (e.g. 0.1 to 10 % by weight, typically 0.5 to 5 % by weight).

As the ring-containing (meth)acrylate, one, two or more species can be used among, for instance, alicyclic hydrocarbon group-containing (meth)acrylates whose number of carbons in the corresponding alicyclic hydrocarbon group being in a range of 4 to 20. The number of carbon atoms in the alicyclic hydrocarbon group is preferably 5 or greater (e.g. 6 or greater, typically 8 or greater). It is preferably 16 or less (e.g. 12 or less, typically 10 or less). The alicyclic hydrocarbon group can be monocyclic or polycyclic such as bicyclic, tricyclic, etc. The alicyclic hydrocarbon group-containing (meth)acrylate includes cyclopentyl (meth)acrylate, cyclohexyl (meth)acrylate, cycloheptyl (meth)acrylate, cyclooctyl (meth)acrylate, isobornyl (meth)acrylate, dicyclopentenyl (meth)acrylate, dicyclopentanyl (meth)acrylate, dicyclopentanyloxyethyl (meth)acrylate, tricyclopentanyl (meth)acrylate, 1-adamantyl (meth)acrylate, 2-methyl-2-adamantyl (meth)acrylate and 2-ethyl-2-adamantyl (meth)acrylate. Other examples of the ring-containing (meth)acrylate include aromatic ring-containing (meth)acrylates such as phenyl (meth)acrylate, benzyl (meth)acrylate, etc. Preferable examples include cyclohexyl (meth)acrylate, isobornyl (meth)acrylate, dicyclopentenyl (meth)acrylate, dicyclopentanyl (meth)acrylate, and 1-adamantyl (meth)acrylate. In particular, cyclohexyl methacrylate (CHMA), isobornyl acrylate (IBXA), isobornyl methacrylate (IBXMA), dicyclopentanyl acrylate (DCPA), dicyclopentanyl methacrylate (DCPMA), 1-adamantyl acrylate (ADA), 1-adamantyl methacrylate (ADMA) are more preferable. CHMA and DCPMA are even more preferable.

When the alicyclic hydrocarbon group-containing (meth)acrylate is used as a monomer constituting the acrylic oligomer, from the standpoint of the adhesion and cohesion, the ratio (i.e. copolymerization ratio) of alicyclic hydrocarbon group-containing (meth)acrylate to all monomers constituting the acrylic oligomer is preferably about 30 to 90 % by weight (e.g. 50 to 80 % by weight, typically 55 to 70 % by weight).

In a preferable embodiment, the acrylic oligomer comprises as its monomeric component(s) a acyclic alkyl (meth)acrylate and/or alicyclic hydrocarbon group-containing (meth)acrylate. In this embodiment, the combined ratio of acyclic alkyl group-containing and alicyclic hydrocarbon group-containing (meth)acrylates to all the monomers constituting the acrylic oligomer is preferably about 80 % by weight or greater (e.g. 90 to 100 % by weight, typically 95 to 100 % by weight). The monomeric component(s) constituting the acrylic oligomer may also essentially consist of a acyclic alkyl (meth)acrylate and/or alicyclic hydrocarbon group-containing (meth)acrylate.

When the acrylic oligomer is a copolymer of a monomer mixture comprising a acyclic alkyl (meth)acrylate and an alicyclic hydrocarbon group-containing (meth)acrylate, the ratio of acyclic alkyl (meth)acrylate to alicyclic hydrocarbon group-containing (meth)acrylate is not particularly limited. In a preferable embodiment, the weight ratio ($W_A:W_B$) of weight fraction ($W_A$) of acyclic alkyl (meth)acrylate to weight fraction ($W_B$) of alicyclic hydrocarbon group-containing (meth)acrylate in the monomeric components of the acrylic oligomer is 1:9 to 9:1, or preferably 2:8 to 7:3 (e.g. 3:7 to 6:4, typically 3:7 to 5:5).

Preferable examples of the acrylic oligomer include the corresponding homopolymers of CHMA, IBXA, IBXMA, DCPA, DCPMA, ADA and ADMA as well as CHMA-IBMA copolymer, CHMA-IBXMA copolymer, CHMA-ACMO copolymer, CHMA-diethylacrylamide (DEAA) copolymer, ADA-MMA copolymer, DCPMA-IBXMA copolymer, DCPMA-MMA copolymer, EA-2EHA copolymer, and the like. The copolymers may be essentially formed of the corresponding monomers or may further comprise a small amount (e.g. 10 % by weight or less, typically 3 % by weight or less) of a copolymerized component (co-monomer).

Although not particularly limited to this, the monomeric composition (i.e. polymer composition) of the acrylic oligomer can be designed so as to have a Tg of 300 °C or lower. Herein, the Tg of an acrylic oligomer refers to the value determined based on the monomeric composition of the acrylic oligomer, similarly to the Tg based on the monomeric composition of the acrylic polymer. From the standpoint of the initial adhesiveness, the acrylic oligomer's Tg is preferably 180 °C or lower, or more preferably 160 °C or lower. When the initial adhesiveness is of great importance, the acrylic oligomer's Tg can be 100 °C or lower (e.g. 70 °C or lower, typically 50 °C or lower), or even 0 °C or lower (e.g. -30 °C or lower, or -50 °C or lower). From the standpoint of the cohesion of the PSA, the Tg is preferably -75 °C or higher (e.g. -60 °C or higher). When the PSA's cohesion is of great importance, the Tg can be 0 °C or higher, 10 °C or higher (e.g. 30 °C or higher), or even 60 °C or higher (e.g. 100 °C or higher, typically 120 °C or higher).

The acrylic oligomer's Mw is not particularly limited, but is typically about $0.1 \times 10^4$ to $10 \times 10^4$. From the standpoint of increasing the adhesive properties (e.g. adhesive strength, repulsion resistance), the acrylic oligomer's Mw is preferably $5 \times 10^4$ or smaller, or more preferably $3 \times 10^4$ or smaller (e.g. $1 \times 10^4$ or smaller, typically $0.4 \times 10^4$ or smaller). From the standpoint of the cohesion, fog preventability of the PSA, etc., the Mw is preferably $0.2 \times 10^4$ or larger (e.g. $0.3 \times 10^4$ or larger). The Mw can be $1 \times 10^4$ or larger (e.g. $2 \times 10^4$ or larger). The acrylic oligomer's molecular weight can be adjusted, for instance, by the use of a chain transfer agent as necessary in the polymerization.

The acrylic oligomer can be formed by polymerizing its constituent monomers. The method and embodiment of polymerization are not particularly limited. Various heretofore known polymerization methods (e.g. solution polymerization, emulsion polymerization, bulk polymerization, photopolymerization, radiation polymerization, etc.) can be used in suitable embodiments. The type and amount of polymerization initiator (e.g. an azo-based polymerization initiator such as AIBN, a peroxide-based polymerization initiator such as di-t-hexylperoxide and t-hexylperoxi-2-ethylhexanoate) used as necessary are also generally as described above. Thus, repetitive description is omitted here.

To adjust the molecular weight of the acrylic oligomer, a chain transfer agent can be used in the polymerization. Examples of the usable chain transfer agent include a compound having a mercapto group, thioglycolic acid and its derivatives, etc. Specific examples of the mercapto group-containing compound include octylmercaptan, n-dodecylmercaptan, t-dodecylmercaptan, etc. Specific examples of the thioglycolic acid and its derivatives include, besides thioglycolic acid, thioglycolic acid esters such as ethyl thioglycolate, propyl thioglycolate, butyl thioglycolate, t-butyl thioglycolate, 2-ethylhexyl thioglycolate, octyl thioglycolate, decyl thioglycolate, and dodecyl thioglycolate, thioglycolic acid ester of ethylene glycol, thioglycolic acid ester of neopentyl glycol, thioglycolic acid ester of pentaerithritol, etc. Among them, a particularly preferable chain transfer agent is thioglycolic acid.

The amount of chain transfer agent used is not particularly limited. It can be suitably adjusted in accordance with the Mw of the target acrylic oligomer, etc. Usually, to 100 parts by weight of monomers forming the acrylic oligomer, it is preferable to use about 0.1 to 20 parts by weight (preferably 0.2 to 15 parts by weight, more preferably 0.3 to 10 parts by weight) of chain transfer agent.

The acrylic oligomer content in the PSA layer disclosed herein is suitably, for instance, 0.1 part by weight or greater to 100 parts by weight of the base polymer (typically an acrylic polymer). From the standpoint of obtaining the effect of the acrylic oligomer to a greater extent, the acrylic oligomer content is preferably 0.3 part by weight or greater, or more preferably 0.5 part by weight or greater (e.g. 1 part by weight or greater, typically 3 parts by weight or greater) to 100 parts by weight of the base polymer (typically an acrylic polymer). From the standpoint of the fog preventability and miscibility with the acrylic polymer, etc., the acrylic oligomer content is suitably less than 30 parts by weight (e.g. less than 20 parts by weight) or preferably 15 parts by weight or less (e.g. 7 parts by weight or less, typically 3 parts by weight or less) to 100 parts by weight of the base polymer (typically an acrylic polymer). Even with the addition of such a small amount, the use of the acrylic oligomer can bring about improved rough surface conformability.

(Tackifier)

In a preferable embodiment, the PSA layer comprises a tackifier. The tackifier is not particularly limited, but various tackifier resins can be used, for example, a rosin-based tackifier resin, terpene-based tackifier resin, hydrocarbon-based tackifier resin, phenol-based tackifier resin, xylene-based tackifier resin, etc. These tackifiers can be used singly as one species or in a combination of two or more species.

Specific examples of the rosin-based tackifier include unmodified rosins (raw rosins) such as gum rosin, wood rosin, tall-oil rosin, etc.; modified rosins obtainable from these unmodified rosins via modifications such as hydrogenation, disproportionation, polymerization, etc. (hydrogenated rosins, disproportionated rosins, polymerized rosins, other chemically-modified rosins, etc.); other various rosin derivatives; and the like. Examples of the rosin derivatives include a rosin ester such as an alcohol-esterification product of an unmodified rosin (i.e. an esterified rosin), an alcohol-esterification product of a modified rosin (i.e. an esterified modified rosin), etc.; an unsaturated fatty acid-modified rosin obtainable by modifying an unmodified rosin or modified rosin with an unsaturated fatty acid; an unsaturated fatty acid-modified rosin ester obtainable by modifying a rosin ester with an unsaturated fatty acid; a rosin alcohol obtainable by reduction of the carboxy group in an unmodified rosin, modified rosin, unsaturated fatty acid-modified rosin or unsaturated fatty acid-modified rosin ester; metal salts of rosins (particularly rosin esters) such as unmodified rosins, modified rosins or various kinds of rosin derivatives; a rosin-phenol resin obtainable by acid-catalyzed addition of phenol to a rosin (unmodified rosin, modified rosin, various kinds of rosin derivatives, etc.) followed by thermal polymerization; and the like.

Examples of the terpene-based tackifier include terpene-based resins such as $\alpha$-pinene polymer, ß-pinene polymer, dipentene polymer, etc.; modified terpene-based resins obtained by modification (phenol modification, aromatic group modification, hydrogenation, hydrocarbon modification, etc.) of these terpene-based resins; and the like. Examples of the modified terpene resin include a terpene-phenol-based resin, styrene-modified terpene-based resin, aromatic group-modified terpene-based resin, hydrogenated terpene-based resin, etc.

Examples of the hydrocarbon-based tackifier resin include various hydrocarbon-based resins such as an aliphatic hydrocarbon resin, aromatic hydrocarbon resin, alicyclic hydrocarbon resin, aliphatic-aromatic petroleum resin (styrene-olefin-based copolymer, etc.), aliphatic-alicyclic petroleum resin, hydrogenated hydrocarbon resin, coumarone-based resin, coumarone-indene-based resin, etc.

The xylene-based tackifier resin include a xylene resin and various modified xylene resins such as an alkylphenolic xylene resin, novolac phenolic resin, resol-type phenolic xylene resin, polyol-modified xylene resin, ethyleneoxide-modified xylene resin, etc. Preferable examples of the xylene resin include a xylene-formaldehyde polycondensate (e.g. m-xylene-formaldehyde polycondensate) which is a polycondensation product of a xylene (e.g. m-xylene) and formaldehyde.

In a preferable embodiment, as the tackifier, a rosin-based tackifier resin, terpene-based tackifier resin or hydrocarbon-based tackifier resin is used. Among them, the rosin-based tackifier resin and terpene-based tackifier resin are more preferable. When the adherend surface is formed of a low polar material, in view of the conformability to the low polar adherend, a hydrogenated rosin-based tackifier resin and hydrogenated terpene-based tackifier resin are more preferable.

The softening point (softening temperature) of the tackifier disclosed herein is not particularly limited. It is suitably about 60 °C or higher (e.g. 80 °C or higher). Such a tackifier can bring about a PSA sheet of higher performance (e.g. excellent rough surface conformability). From the standpoint of the fog preventability, the tackifier has a softening point of about 100 °C or higher (e.g. 120 °C or higher, typically 140 °C or higher). The upper limit of softening point of the tackifier can be, but not particularly limited to, about 180 °C or lower (e.g. 160 °C or lower). The softening point of a tackifier herein is defined as the value measured by the softening point test method (ring and ball method) specified in JIS K5902:2006 and JIS K 2207:2006.

When the art disclosed herein is implemented in an embodiment using a tackifier, from the standpoint of obtaining sufficient effect of the tackifier, the tackifier content is preferably about 0.5 part by weight or greater (e.g. 1 part by weight or greater, typically 3 parts by weight or greater) to 100 parts by weight of the base polymer (typically an acrylic polymer). From the standpoint of the fog preventability, the tackifier content is preferably about 8 parts by weight or less (typically 6 parts by weight or less, e.g. 3 parts by weight or less) to 100 parts by weight of the base polymer (typically an acrylic polymer). The art disclosed herein can be preferably practiced in an embodiment where the PSA layer is essentially free of a tackifier.

(Crosslinking Agent)

The PSA composition used for forming the PSA layer disclosed herein preferably comprises a crosslinking agent. The type of crosslinking agent is not particularly limited. Among various crosslinking agents usually used in the PSA field, a suitable species can be selected and used in accordance with, for instance, the type of crosslinkable functional group present in the functional group-containing monomer. Examples of the various crosslinking agents include isocyanate-based crosslinking agents, epoxy-based crosslinking agents, melamine-based crosslinking agents, oxazoline-based crosslinking agents, aziridine-based crosslinking agents, metal chelate-based crosslinking agents, etc. In particular, isocyanate-based crosslinking agents, epoxy-based crosslinking agents and melamine-based crosslinking agents are preferable. These crosslinking agents can be used singly as one species or in a combination of two or more species.

The isocyanate-based crosslinking agent includes an aromatic isocyanate, alicyclic isocyanate, aliphatic isocyanate, etc. More specific examples include isocyanate adducts such as trimethylolpropante/trilenediisocyanate trimer adduct (available from Nippon Polyurethane Industry, Co., Ltd.; trade name "CORONATE L"), trimethylolpropante/hexamethylene diisocyanate trimer adduct (available from Nippon Polyurethane Industry, Co., Ltd.; trade name "CORONATE HL"), an isocyanurate of hexamethylene diisocyanate (available from Nippon Polyurethane Industry, Co., Ltd.; trade name "CORONATE HX"), etc. The isocyanate-based crosslinking agents can be used singly as one species or in a combination of two or more species. Specific examples of the epoxy-based crosslinking agent include N,N,N',N'-tetraglycidyl-m-xylenediamine (available from Mitsubishi Gas Chemical Inc.; trade name "TETRAD-X"), 1,3-bis(N,N-diglycidylaminomethyl)cyclohexane (available from Mitsubishi Gas Chemical Inc.; trade name "TETRAD-C"), etc. Examples of the melamine-based crosslinking agent include hexamethylolmelamine and the like. In particular, from the standpoint of combining high levels of adhesive properties and fog preventability, an epoxy-based crosslinking agent is preferable.

The PSA composition according to a preferable embodiment comprises an acrylic polymer in which a carboxy group-containing monomer as a functional group-containing monomer is copolymerized and further comprises a crosslinking agent including an epoxy-based crosslinking agent (the crosslinking agent may consist of an epoxy-based crosslinking agent). Such a PSA composition can bring about a PSA sheet that combines rough surface conformability and removability (typically adhesive transfer preventability) at a high level.

The amount of crosslinking agent that can be included in the PSA composition is not particularly limited. From the standpoint of combining adhesiveness and removability, it is usually about 0.001 to 10 parts by weight relative to 100 parts by weight of the base polymer (preferably an acrylic polymer), or preferably 0.01 to 8 parts by weight (e.g. 0.05 to 5 parts by weight, typically 0.1 to 3 parts by weight). From the standpoint of the rough surface conformability, the amount of crosslinking agent (preferably an epoxy-based crosslinking agent) in the PSA composition is preferably 0.25 part by weight or less (e.g. 0.2 part by weight or less, typically 0.15 part by weight or less) to 100 parts by weight of the base polymer (preferably an acrylic polymer).

(Peel-Adjusting Agent)

When the PSA composition disclosed herein is solvent-based, a PSA layer formed from the solvent-based PSA composition may comprise as a peel-adjusting agent a compound (typically a surfactant) having a hydrophilic part and a lipophilic part within one molecule. As the compound, a known anionic compound, nonionic compound, cationic compound or the like can be used. In particular, an anionic compound or a nonionic compound is preferable.

The PSA layer disclosed herein may comprise, as the peel-adjusting agent, one, two or more species among tin(Sn)-containing compounds such as dioctyltin dilaurate, dibutyltin dilaurate, dibutyltin diacetate, dibutyltin diacetylacetonate, tetra-n-butyltin, trimethyltin hydroxide, etc.; nitrogen(N)-containing compounds including amines such as N,N,N,N'-tetramethylhexanediamine, triethylamine and the like as well as imidazoles, etc. In particular, a Sn-containing compound is preferable. These can serve as catalysts to increase the rate of the crosslinking reaction by the crosslinking agent described later.

In view of the removability and fog preventability, the peel-adjusting agent content can be suitably selected based on the common general knowledge of a person skilled in the art. The art disclosed herein can be preferably implemented in an embodiment where the PSA layer is essentially free of a peel-adjusting agent.

(Other Components)

The PSA composition may comprise, as necessary, various additives generally used in the field of PSA compositions, such as a leveling agent, crosslinking-accelerating agent, plasticizer, softening agent, filler, colorant (pigment, dye, etc.), anti-static agent, anti-aging agent, UV-absorbing agent, antioxidant, photo-stabilizing agent and so on. With respect to these various additives, heretofore known species can be used by typical methods. Since these do not particularly characterize the present invention, further details are omitted.

From the standpoint of the fog preventability, in the PSA layer disclosed herein, the amount of the other components (the total amount of additives including the tackifier and crosslinking agent) besides the base polymer is preferably about 8 parts by weight or less (e.g. 6 parts by weight or less) to 100 parts by weight of the base polymer (typically an acrylic polymer). The art disclosed herein can also be preferably implemented in an embodiment where the amount of the other components besides the base polymer in the PSA layer is about 1 part by weight or less (e.g. 0.7 part by weight or less, typically 0.3 part by weight or less) to 100 parts by weight of the base polymer (typically an acrylic polymer).

(PSA Composition)

The PSA layer disclosed herein may be formed from a water-dispersed PSA composition, solvent-based PSA composition, hot-melt PSA composition, or active energy ray-curing PSA composition. The water-dispersed PSA composition refers to a PSA composition in which the PSA (PSA layer-forming components) is dispersed in an aqueous solvent (solvent primarily comprising water). The solvent-based PSA composition refers to a PSA composition that comprises the PSA in an organic solvent. For excellent adhesive properties such as rough surface conformability, the art disclosed herein can be preferably implemented in an embodiment comprising a PSA layer formed from a solvent-based PSA composition.

(Method for Forming PSA Layer)

The PSA layer disclosed herein can be formed by a heretofore known method. For instance, it is preferable to employ a method (direct method) where the PSA composition is directly provided (typically applied) to the substrate and allowed to dry to form a PSA layer. Alternatively, another applicable method (transfer method) can be employed, where the PSA composition is provided to a releasable surface (release face) and allowed to dry to form a PSA layer on the surface, and the PSA layer is transferred to the substrate. As the release face, a release liner surface, a back face of a substrate treated with a release agent, or the like can be used. While the PSA layer disclosed herein is typically formed in a continuous manner, it is not limited to such a form. For instance, the PSA layer may be formed in a regular or random pattern of dots, stripes, etc.

The PSA composition can be applied with a known or commonly-used coater such as a gravure roll coater, dip roll coater, die coater, and the like. From the standpoint of accelerating the crosslinking reaction and increasing the productivity, etc., the PSA composition is preferably heated to dry. The drying temperature can be, for instance, about 40 °C to 150 °C. It is usually preferably about 60 °C to 130 °C. After the PSA composition is dried, it can be aged so as to adjust the diffusion of the components within the PSA layer, allow the crosslinking reaction to progress, relieve possible strain present in the substrate or PSA layer, and so on.

(Thickness of PSA Layer)

The thickness of the PSA layer is not particularly limited and can be suitably selected in accordance with the purpose. It is usually suitably about 100 $\mu$m or smaller. From the standpoint of the fog preventability, it is preferably about 75 $\mu$m or smaller (e.g. 50 $\mu$m or smaller, typically 30 $\mu$m or smaller). The thickness is suitably 2 $\mu$m or larger. From the standpoint of the rough surface conformability, it is preferably about 3 $\mu$m or larger (e.g. 5 $\mu$m or larger, typically 8 $\mu$m or larger), or more preferably 12 $\mu$m or larger (e.g. 15 $\mu$m or larger). For instance, these ranges can be preferably applied as the thickness of the PSA layer that is included in a surface protection sheet.

<Substrate>

As the substrate of the PSA sheet disclosed herein, resin sheets, paper, fabrics, rubber sheets, foam sheets, composites of these and the like can be used. Examples of resin sheets include a sheet of a polyolefin-based resin such as polyethylene (PE), polypropylene (PP), ethylene-propylene copolymer, etc.; a sheet of a polyester-based resin such as polyethylene terephthalate (PET), etc.; a vinyl chloride-based resin sheet; a vinyl acetate-based resin sheet; a polyimide-based resin sheet; a polyamide-based resin sheet; a fluorine resin-based sheet; cellophane; and the like. Examples of paper include Japanese paper (washi), kraft paper, glassine paper, high-grade paper, synthetic paper, top-coated paper, and the like. Examples of fabrics include woven fabrics and non-woven fabrics of single species or blends of various fibrous substances, etc. Examples of fibrous substances include cotton, staple fiber, Manila hemp, pulp, rayon, acetate fiber, polyester fiber, polyvinyl alcohol fiber, polyamide fiber, polyolefin fiber, and the like. Examples of rubber sheets include a natural rubber sheet, a butyl rubber sheet, and the like. Examples of foam sheets include a polyurethane foam sheet, a polychloroprene rubber foam sheet, and the like.

The art disclosed herein can be preferably applied to a PSA sheet that uses as its substrate a resin sheet primarily comprising a resin such as a polyolefin, polyester, etc. The "resin sheet" herein can typically be a resin sheet obtainable by molding a resin composition primarily comprising the resin into a thin layer. The resin sheet is typically non-porous. The concept of "non-porous resin sheet" herein is distinct from so-called non-woven fabrics (i.e. it excludes non-woven fabrics). Because the resin sheet has at least a certain level of strength, the PSA sheet using the resin sheet as the substrate can provide good protection when used as, for instance, a surface protection sheet. Such a PSA sheet is less susceptible to issues such as tearing, etc., during removal, thereby bringing about excellent removability. The art disclosed herein can be preferably implemented in an embodiment of the PSA sheet using a polyolefin-based resin sheet as the substrate. The substrate having such a composition is preferable also from the standpoint of the recyclability, etc. For instance, a polyolefin-based resin sheet where a PE resin or PP resin accounts for at least 50 % by weight of the entire substrate can be preferably used. In other words, the polyolefin-based resin sheet may be one in which a total amount of a PE resin and a PP resin is 50 % by weight or more in the entire substrate.

The polyolefin-based resin sheet can be a PP resin sheet (a resin sheet in which the resin content constituting the sheet primarily comprises a PP resin). For instance, a resin sheet whose resin content comprises more than 50 % by weight of PP resin is preferable; and a resin sheet whose resin content comprises about 60 % by weight or more (more preferably about 70 % by weight or more) of PP resin is more preferable. In the resin sheet, the resin component may consist essentially of one, two or more species of PP resin. In other words, the polyolefin-based resin sheet can be a resin sheet comprising a PP resin singly as the resin component, for example, a resin sheet in which the resin component excluding the PP resin accounts for less than 1 % by weight of the total resin content. A resin sheet in which a continuous structure (continuous phase) of the PP resin is formed is preferable from the standpoint of the heat resistance, etc.

The primary component of the PE resin can be a polymer (an ethylene-based polymer) of various types that contains ethylene as a constituent. It can be a PE resin consisting essentially of one, two or more species of ethylene-based polymer. The ethylene-based polymer can be an ethylene homopolymer or a product of copolymerization (random copolymerization, block copolymerization, etc.) of ethylene as the primary monomer and other $\alpha$-olefin(s) as secondary monomer(s). Preferable examples of the $\alpha$-olefin include $\alpha$-olefins having 3 to 10 carbon atoms such as propylene, 1-butene (which can be a branched 1-butene), 1-hexene, 4-methyl-1-pentene, 1-octene, and the like. For example, a PE resin that can be preferably used comprises as the primary component an ethylene-based polymer in which up to 10 % by weight (typically up to 5 % by weight) of an $\alpha$-olefin is copolymerized as the secondary monomer.

It can also be a PE resin comprising a copolymer of ethylene and a monomer (functional monomer) containing other functional group(s) in addition to a polymerizing functional group, a PE resin obtained by copolymerizing such a functional monomer with an ethylene-based polymer, or the like. Examples of a copolymer of ethylene and a functional monomer include ethylene-vinyl acetate copolymers (EVA), ethylene-acrylic acid copolymers (EAA), ethylene-methacrylic acid copolymers (EMAA), ethylene-methyl acrylate copolymers (EMA), ethylene-ethyl acrylate copolymers (EEA), ethylene-methyl methacrylate copolymers (EMMA), ethylene-(meth)acrylic acid (i.e., ethylene-acrylic acid, or ethylene-methacrylic acid) copolymers crosslinked by metal ions, and the like.

The density of the PE resin is not particularly limited, and it can be, for instance, about 0.90 g/cm$^3$ to 0.94 g/cm$^3$. Preferable PE resins include low-density polyethylene (LDPE) and linear low-density polyethylene (LLDPE). The PE resin may comprise one, two or more species of LDPE and one, two or more species of LLDPE. There are no particular limitations on the proportions of the respective LDPEs or LLDPEs, or the blend ratio of LDPE to LLDPE, and they can be suitably selected so as to obtain a PE resin that exhibits desirable properties.

Although not particularly limited, as the resin material constituting the substrate, a resin material having a MFR (melt flow rate) of approximately 0.5 g/10min to 80 g/10min (e.g., 0.5 g/10min to 10 g/10min) can be preferably used. In this description, the MFR refers to a value measured by method A at a temperature of 190 °C (PE) or 230 °C (PP) with an applied load of 2.16 kg based on JIS K7210:1999 or ASTM D1238. The MFR can be adjusted by the selection of the resin species constituting the substrate, its molecular weight, etc. The resin material can be a polyolefin-based resin (e.g., a PP resin, a PE resin, a blend resin of a PP resin and a PE resin, or the like) having a MFR in the said range.

The resin sheet (preferably a polyolefin-based resin sheet) used as a substrate of the PSA sheet disclosed herein may contain as necessary suitable components allowed for inclusion in the substrate in accordance with desired properties such as light-blocking ability, weatherability, heat resistance, consistent coating, adhesive properties, and so on. For example, it may suitably contain additives such as pigments (typically inorganic pigments), fillers, anti-oxidants, light-stabilizing agents (meaning to include radical scavengers, UV absorbers, etc.), slipping agents, anti-blocking agents, and so on. Examples of materials that can be preferably used as pigments or fillers include inorganic powders such as titanium oxide, zinc oxide, calcium carbonate, and the like. The amount of an inorganic pigment or a filler can be suitably selected in consideration of the extent of the effects produced by the additive and the substrate moldability suitable for the method (casting, inflation molding, etc.) employed for forming the resin sheet. For example, the amount of various additives added can be about equivalent to usual amounts added in the field of resin sheets used as substrates in PSA sheets (e.g. surface protection sheets) or for similar purposes.

The substrate may have a single-layer structure or a multi-layer structure that includes two or more layers. When it has a multi-layer structure, at least one layer preferably has a continuous structure of the PP resin or a PE resin. An example of the resin sheet that can be preferably used as the substrate of the PSA sheet disclosed herein is a polyolefin-based resin sheet whose resin component consists essentially of a PP resin and/or a PE resin. The resin sheet (preferably a polyolefin-based resin sheet) disclosed herein can be produced by employing a suitable general sheet-forming method heretofore known. For example, a method that can be preferably employed extrudes a molding material comprising the resin, additives added as necessary, etc.

In substrate 1 (typically a resin sheet) shown in Fig. 1, face (front face) 1A to which PSA layer 2 is to be provided can be pre-subjected to a surface treatment such as an acid treatment, corona discharge treatment, UV irradiation, plasma treatment, or the like. The face (back face) 1B on the opposite side of substrate 1 from the face to which PSA layer 2 is provided can be subjected to a release treatment as necessary. The release treatment may be a treatment where a release agent based on, for instance, silicone, a long-chain alkyl, or fluorine, etc., is applied to form a thin layer having a thickness of typically about 0.01 $\mu$m to 1 $\mu$m (e.g., 0.01 $\mu$m to 0.1 $\mu$m). Such a release treatment can produce effects such as facilitating unwinding of a wound body being PSA sheet 10 wound in a roll.

The thickness of the substrate is not particularly limited and can be suitably selected according to the intended purpose. Usually, it is suitable to use a substrate having a thickness of about 300 $\mu$m or smaller (e.g., about 10 $\mu$m to 200 $\mu$m). In a preferable embodiment of the art disclosed herein, the substrate has a thickness of about 20 $\mu$m to 100 $\mu$m (more preferably about 30 $\mu$m to 70 $\mu$m). The PSA sheet made with a substrate having such a thickness is preferable, for instance, as a surface protection sheet (typically a protection sheet for automobile interior materials).

<Release Liner>

The adhesive face of the PSA sheet disclosed herein may be protected with a release liner until used. As the release liner, any conventional release paper or the like can be used without any particular limitations. For example, it is possible to use a release liner having a release layer on a surface of a liner substrate such as a resin sheet or paper, etc.; a release liner formed from a poorly-adhesive material such as a fluorine-based polymer (polytetrafluoroethylene, etc.) or a polyolefin-based resin (polyethylene, polypropylene, etc.); or the like. The release layer can be formed, for instance, by subjecting the substrate to a surface treatment with a release agent such as a silicone-based, a long-chain alkyl-based, a fluorine-based, a molybdenum disulfide-based release agent or the like.

<Overall Thickness of PSA Sheet>

The overall thickness of the PSA sheet disclosed herein (including the PSA layer and substrate, but not the release liner) is not particularly limited. It is suitably in a range of about 12 $\mu$m to 500 $\mu$m. From the standpoint of the adhesive properties, handling properties, etc., the overall thickness of the PSA sheet is preferably about 20 $\mu$m to 300 $\mu$m (e.g. 30 $\mu$m to 100 $\mu$m, typically 40 $\mu$m to 80 $\mu$m).

<Applications>

The PSA sheet disclosed herein can be applied to various fields and its application is not particularly limited. For instance, the PSA sheet disclosed herein can be used as a protection sheet (typically a surface protection sheet) applied to a desirable part of adherend (typically an adherend surface) to protect the part. Such a protection sheet can be temporarily adhered to the adherend for a period during which the adherend needs to be protected and eliminated (removed) from the adherend after completion of the protection (when the protection is no longer required). The material of the adherend surface to which the PSA sheet is adhered can be, but not particularly limited to, an organic material such as a synthetic resin; an inorganic material such as a metal; paper; a wooden material, etc.

The PSA sheet disclosed herein exhibits excellent rough surface conformability and thus is preferably used as a rough surface protection sheet. The rough surface herein refers to a surface typically having an arithmetic mean surface roughness greater than 1 $\mu$m. The rough surface in this description encompasses a hard, rough surface of adherend formed from a synthetic resin or the like as well as a soft, rough surface of adherend having a soft material on the surface. Specific examples include a rough surface of a low polar adherend such as PP; a rough surface formed of an elastic foam body (elastic foam resin) typified by soft urethane foam and the like; and a rough surface formed with a fiber structure (typically a knitted material, woven fabrics, non-woven fabrics, etc., or also called a fiber assembly). The rough surface may have a curved surface or unevenness (irregularities). With respect to a rough surface as described above, the PSA sheet (rough surface protection sheet) disclosed herein can provide great rough surface conformability and removability, and bring about excellent protection. The rough surface protection sheet is preferably used for an application where it is applied to an adherend surface having an arithmetic mean surface roughness Ra of 5 $\mu$m or greater (e.g. 10 $\mu$m or greater, typically 12 $\mu$m or greater, with the upper limit being, for instance, about 100 $\mu$m). The rough surface protection sheet disclosed herein can also be applied to an application where it is adhered to an adherend surface having an arithmetic mean surface roughness Ra of 20 $\mu$m to 50 $\mu$m (e.g. 30 $\mu$m to 40 $\mu$m).

The PSA sheet disclosed herein exhibits at least a certain level of fog preventability in the glass fogging test; and therefore, it is suitable for use in a closed space having a surface formed of a transparent material such as glass. For instance, it is suitable for use in automobiles, aircrafts and residential houses. Thus, the PSA sheet disclosed herein is preferable as a PSA sheet used on automobile interiors for surface protection inside automobiles (e.g. surface protection of automobile interior materials), etc.; and as a PSA sheet used for interiors of residential houses. Because it can exhibit excellent rough surface conformability, the PSA sheet disclosed herein is particularly preferable as a PSA sheet (surface protection sheet) to protect surfaces of automobile interior materials, such as dashboards, door trims, kicking plates, floor carpets, floor mats and so on in automobiles. The PSA sheet used for these applications can conform to adherend surfaces (typically rough surfaces of the adherend) without peeling to provide excellent protection when, for instance, transport operations and in-vehicle services are provided during the protection periods of the members.

EXAMPLES

Several working examples related to the present invention are described below, but the present invention is not to be limited to these working examples. In the description below, "parts" and "%" are by weight unless otherwise specified.

<Example 1>

To a reaction vessel equipped with a condenser, nitrogen inlet, thermometer and stirrer, were placed toluene as a polymerization solvent; as a monomeric starting material, 100 parts of 2-ethylhexyl acrylate (2EHA), 10 parts of vinyl acetate (VAc), 3 parts of acrylic acid (AA) and 0.2 part of 2-hydroxyethyl acrylate (HEA); and 0.3 part of benzoyl peroxide (available from NOF Corporation, "NYPER BW") as a peroxide-based polymerization initiator. The reaction vessel was purged with nitrogen at room temperature for one hour. Subsequently, the mixture in the vessel was heated to a temperature of 63 °C and polymerization was carried out under a nitrogen flow for six hours. The mixture in the vessel was then heated to a temperature of 80 °C and allowed to cure for six hours to obtain an acrylic polymer solution. The acrylic polymer had a Tg of -61.0 °C, determined by the Fox equation. The acrylic polymer had a weight average molecular weight (Mw) of about $50 \times 10^4$. To 100 parts of non-volatiles of the acrylic polymer in the resulting acrylic polymer solution, was mixed 0.05 part of an epoxy-based crosslinking agent (available from Mitsubishi Gas Chemical Inc.; trade name "TETRAD-C") to obtain a PSA composition according to this example.
The resulting PSA composition was applied to one face of a polyethylene substrate (available from Oomorikasei Co., Ltd.; trade name "POLYTOP NSM-M FILM," about 50 $\mu$m thick) and allowed to dry at 70 °C for two minutes to a thickness of about 10 $\mu$m to fabricate a PSA sheet according to this example.

<Examples 2-4>

The monomer composition and amount of the epoxy-based crosslinking agent were modified as shown in Table 1. Otherwise, in the same manner as Example 1, PSA sheets according to the respective examples were obtained.

<Examples 5-9>

To 100 parts of non-volatiles of the acrylic polymer in the acrylic polymer solution obtained in Example 3, were mixed 0.10 part of an epoxy-based crosslinking agent (available from Mitsubishi Gas Chemical Inc.; trade name "TETRAD-C") and 1 part of a hydrogenated terpene resin (trade name "CLEARON P150" available from Yasuhara Chemical Co., Ltd.; softening point: about 150 °C) as a tackifier to obtain a PSA composition according to this example. Using this PSA composition and otherwise in the same manner as Example 1, a PSA sheet according to Example 5 was obtained.
The type and amount of tackifier were modified as shown in Table 1. Otherwise, in the same manner as Example 5, PSA sheets according to Examples 6 to 9 were obtained. "CLEARON P115" (softening point: 115 °C) is a hydrogenated terpene resin available from Yasuhara Chemical Co., Ltd.

<Examples 10-11>

The thickness of the PSA layer was modified to 16 $\mu$m. Otherwise, in the same manner as Examples 5 and 6, PSA sheets according to Examples 10 and 11 were obtained, respectively.

<Example 12>

The monomer composition of the acrylic polymer was modified as shown in Table 1. Otherwise, in the same manner as Example 2, a PSA sheet according to this example was obtained.

<Example 13>

The amount of the epoxy-based crosslinking agent was modified as shown in Table 1. Otherwise, in the same manner as Example 3, a PSA sheet according to this example was obtained.

<Example 14>

The amount of the epoxy-based crosslinking agent was modified as shown in Table 1. Otherwise, in the same manner as Example 6, a PSA sheet according to this example was obtained.

<Examples 15-16>

The type and amount of tackifier were modified as shown in Table 1. Otherwise, in the same manner as Example 5, PSA sheet according to the respective examples were obtained. "CLEARON P85" (softening point: about 85 °C) is a hydrogenated terpene resin available from Yasuhara Chemical Co., Ltd.

<Example 17>

To 100 parts of non-volatiles of the acrylic polymer in the acrylic polymer solution obtained in Example 3, were mixed 0.10 part of an epoxy-based crosslinking agent (available from Mitsubishi Gas Chemical Inc.; trade name "TETRAD-C") and 0.5 part of an acrylic oligomer (1) to obtain a PSA composition according to this example. Using this PSA composition and otherwise in the same manner as Example 10, a PSA sheet according to this example was obtained.
The acrylic oligomer (1) used was prepared by the following method: To 60 parts of dicyclopentanyl methacrylate (DCPMA; available from Hitachi Chemical Co., Ltd.; trade name "FA-513M") and 40 parts of methyl methacrylate (MMA), were added 3.5 parts of thioglycolic acid as a chain transfer agent and ethyl acetate as a polymerization solvent. The resultant was bubbled with nitrogen to remove oxygen in the solution. Subsequently, the mixture was heated to 70 °C and stirred at 70 °C for one hour. As a polymerization initiator, 0.2 part of azobisisobutylonitrile was then added. This was allowed to undergo reaction at 70 °C for two hours and then at 80 °C for two hours. After this, the mixture was placed under reduced pressure at 130 °C and stirred for one hour to remove remaining monomers to obtain the acrylic oligomer (1) having a Mw of about 3000 and a Tg of about 144 °C.

<Examples 18-19>

The acrylic oligomer (1) was changed to an acrylic oligomer (2) or an acrylic oligomer (3). Otherwise in the same manner as Example 17, PSA sheets according to Examples 18 and 19 were obtained.
The acrylic oligomer (2) used was prepared by the following method: To 57 parts of cyclohexyl methacrylate (CHMA) and 40 parts of isobutyl methacrylate (IBMA), was added 4.0 parts of thioglycolic acid as a chain transfer agent. The resulting mixture was bubbled with nitrogen to eliminate oxygen in the solution. Subsequently, when the mixture was heated and reached 90 °C, was mixed 0.005 part of trade name "PERHEXYL O" (available from NOF Corporation) and 0.01 part of trade name "PERHEXYL D" (available from NOF Corporation) as polymerization initiators. This was stirred at 90 °C for one hour, then heated to 150 °C over one hour, and then stirred at 150 °C for one hour. Subsequently, it was heated to 170 °C over one hour and stirred at 170 °C for one hour. It was then placed under reduced pressure at 170 °C and stirred for one hour to eliminate remaining monomers, whereby the acrylic oligomer (2) having a Mw of about 3000 and a Tg of 45.38 °C was obtained.
As the acrylic oligomer (3), was used trade name "MODAFLOW" (copolymer of 29 part ethyl acrylate, 70 part 2-ethylhexyl acrylate and 1 part acrylamide; Mw about 3000; Tg about -56.7 °C) available from Monsanto Company.

<Examples 20-22>

The amount of acrylic oligomer (1), (2) or (3) was modified as shown in Table 2. Otherwise in the same manner as Examples 17 to 19, PSA sheets according to Examples 20 to 22 were obtained, respectively.

[Glass Fogging test]

The PSA sheet according to each example was cut to a circle of 80 mm diameter to prepare a specimen. The specimen was placed in a glass vial having an opening of 85 mm inner diameter, a bottom of 80 mm inner diameter and a height of 190 mm. The glass vial with the specimen was placed in an oil bath (150 mm oil depth) at 100 °C. A glass plate of a known reflectance (reflectance of the glass plate before left standing as below, or initial reflectance) was obtained. The glass vial was covered with the glass plate over the opening, and with a weight on top of the glass plate and left standing for two hours. After left standing, reflectance (final reflectance) was measured for the glass plate (for the portion that had been placed over the opening of the glass vial) and fog preventability was determined by an equation:

$$\text{Fog Preventability (\%)} = (\text{Final reflectance})/(\text{Initial reflectance}) \times 100$$

The results are shown in Table 1 and Table 2.

The glass fogging test was performed, using a fogging tester available from Thermo Fisher Scientific Inc. In the measurement using the tester, the top face of the glass plate covering the glass vial is cooled to 21 °C. The reflectance was measured at 60° angle of incidence, using a glossmeter (available from Hach-Lange, trade name "REFO 60"). The PSA sheet was placed in the glass vial with the adhesive face being on top.

[180° Peel Strength to PP Rough Surface (PP Rough Surface Peel Strength)]

The PSA sheet according to each example was cut to 20 mm wide by 100 mm long in size to fabricate a measurement sample. In an environment at 23 °C and 50 % RH, the adhesive face of the measurement sample was exposed and press-bonded to an adherend with a 2 kg rubber roller moved back and forth once. This was left standing in the same environment for 30 minutes. Using a tensile tester, based on JIS Z0237:2000, peel strength (N/20mm-width) was measured at a peel angle of 180°, at a tensile speed of 300 mm/min. As the tensile tester, trade name "AUTOGRAPH AG-IS" available from Shimadzu Corporation was used. As the adherend, a PP plate having a rough surface (product name "PP craft sheet" available from Acrysunday Co., Ltd.; arithmetic mean surface roughness Ra 14.69 $\mu$m) was used. The adhesive face was applied to the rough surface of the PP plate and subjected to the peel strength measurement. The results are shown in Table 1 and Table 2.

[Peel Test]

A long PP plate having a rough surface (product name "PP craft sheet" available from Acrysunday Co., Ltd.; arithmetic mean surface roughness Ra 14.69 $\mu$m) was obtained. A PP plate (15 mm wide by 8.32 mm thick) having a smooth surface was also obtained; and by arranging its width direction to parallel the length direction of the long rough-surfaced PP plate, the smooth PP plate was placed at an end of the rough-surfaced PP plate and fixed thereto to fabricate an adherend for the measurement as shown in Fig. 2. The L-shaped adherend 200 comprises a substrate 201 formed of the PP plate having a rough surface 201A on top as well as a step 202 having a smooth, horizontal surface 202A on top and a height of 8.32 mm, with the step 202 being fixed to the end of the top face (rough surface) 201A of substrate 201. The adherend 200 for the measurement has a distance of 90 mm from an end E (the end to which the step 202 is not fixed) of substrate 201 to the step 202.

The PSA sheet according to each example was cut into a 25 mm wide strip to prepare a measurement sample. As shown in Fig. 2(a), the measurement sample 100 was adhered and fixed at an end of its length direction to the top face 202A of step 202 in the adherend 200 for the measurement and at another end to an end E of substrate 201 in the adherend 200 for the measurement, with the measurement sample 100 being under tension. Subsequently, with a 2 kg rubber roller, the measurement sample 100 was adhered to the rough surface 201A of substrate 201, up to 66.5 mm from the end E of substrate 201 towards the step 202 side (see the measurement sample 100 drawn in the solid line in Fig 2(b)). The resultant was left standing in an environment at 23 °C and 50 % RH. After 5 minutes and after 20 minutes, distance D (mm) separated (peeled away) from the rough surface 201A of measurement sample 100 (in a state shown in the two-dot chain line in Fig. 2(b)) was measured and evaluated into the following two grades. The results are shown in Table 1 and Table 2.

P (pass): The peeled distance D after 20 minutes from the adhesion to the rough surface was 44 mm or less (about 2/3 of the adhered distance of 66.5 mm or less).

F (fail): The peeled distance D after 20 minutes from the adhesion to the rough surface was greater than 44 mm.

[Table 1]

Table 1

| | | Ex. 1 | Ex.2 | Ex.3 | Ex. 4 | Ex.5 | Ex.6 | Ex. 7 | Ex. 8 | Ex. 9 | Ex.10 | Ex.11 | Ex.12 | Ex. 13 | Ex. 14 | Ex.15 | Ex.16 |
|---|---|---|---|---|---|---|---|---|---|---|---|---|---|---|---|---|---|
| Acrylic polymer (parts) | 2EHA | 100 | 100 | 100 | 100 | 100 | 100 | 100 | 100 | 100 | 100 | 100 | 100 | 100 | 100 | 100 | 100 |
| | VAc | 10 | 10 | - | - | - | - | - | - | - | - | - | 80 | - | - | - | - |
| | AA | 3 | 3 | 3 | 3 | 3 | 3 | 3 | 3 | 3 | 3 | 3 | 3 | 3 | 3 | 3 | 3 |
| | HEA | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Tg (°C) | | -61.0 | -61.0 | -68.1 | -68.1 | -68.1 | -68.1 | -68.1 | -68.1 | -68.1 | -68.1 | -68.1 | -32.1 | -68.1 | -68.1 | -68.1 | -68.1 |
| Crosslinking agent (parts*) | Tetrad C | 0.05 | 0.10 | 0.10 | 0.20 | 0.10 | 0.10 | 0.10 | 0.10 | 0.10 | 0.10 | 0.10 | 0.10 | 0.30 | 0.30 | 0.10 | 0.10 |
| Tackifier (parts*) | Clearon P150 | - | - | - | - | 1 | 5 | 10 | - | 2.5 | 1 | 5 | - | - | 5 | - | 2.5 |
| | Clearon P115 | - | - | - | - | - | - | - | 5 | 2.5 | - | - | - | - | - | - | - |
| | Clearon P85 | - | - | - | - | - | - | - | - | - | - | - | - | - | - | 5 | 2.5 |
| PSA layer thickness (μm) | | 10 | 10 | 10 | 10 | 10 | 10 | 10 | 10 | 10 | 16 | 16 | 10 | 10 | 10 | 10 | 10 |
| Fog preventability (%) | | 96.4 | 99.6 | 95.6 | 94.6 | 99.3 | 99.3 | 99.4 | 99.3 | 99.2 | 96.4 | 95.2 | 99.1 | 95.5 | 94.5 | 72.7 | 75.4 |
| PP rough surface peel strength (N/20mm) | | 0.65 | 0.61 | 0.50 | 0.34 | 0.68 | 0.72 | 0.70 | 0.69 | 0.61 | 0.92 | 0.93 | 0.12 | 0.27 | 0.28 | 0.71 | 0.72 |
| Peel test | after 5 min (mm) | 26.3 | 28.8 | 29.0 | 35.4 | 29.0 | 28.1 | 27.1 | 29.4 | 29.9 | 25.3 | 24.4 | 63.3 | 58.8 | 55.6 | 26.8 | 27.4 |
| | after 20 min (mm) | 31.4 | 32.5 | 36.5 | 42.1 | 36.5 | 33.1 | 33.0 | 34.5 | 34.6 | 29.5 | 30.1 | 66.5 | 66.5 | 66.5 | 33.5 | 32.4 |
| | Grade | P | P | P | P | P | P | P | P | P | P | P | F | F | F | P | P |

*parts to 100 parts of acrylic polymer

[Table 2]

Table 2

| | | Ex. 17 | Ex. 18 | Ex. 19 | Ex. 20 | Ex. 21 | Ex. 22 |
|---|---|---|---|---|---|---|---|
| Acrylic polymer (parts) | 2EHA | 100 | 100 | 100 | 100 | 100 | 100 |
| | VAc | - | - | - | - | - | - |
| | AA | 3 | 3 | 3 | 3 | 3 | 3 |
| | HEA | 0.2 | 0.2 | 0.2 | 0.2 | 0.2 | 0.2 |
| | Tg (°C) | -68.1 | -68.1 | -68.1 | -68.1 | -68.1 | -68.1 |
| Crosslinking agent (parts*) | Tetrad C | 0.10 | 0.10 | 0.10 | 0.10 | 0.10 | 0.10 |
| Acrylic oligomer (1) (parts*) | | 0.5 | - | - | 10 | - | - |
| Acrylic oligomer (2) (parts*) | | - | 0.5 | - | - | 10 | - |
| Acrylic oligomer (3) (parts*) | | - | - | 0.5 | - | - | 10 |
| PSA layer thickness (μm) | | 16 | 16 | 16 | 16 | 16 | 16 |
| Fog preventability (%) | | 99.2 | 99.4 | 99.5 | 97.3 | 96.4 | 98.6 |
| PP rough surface peel strength (N/20mm) | | 0.82 | 0.85 | 0.72 | 1.05 | 1.22 | 1.24 |
| Peel test | after 5 min (mm) | 25.1 | 22.4 | 23.1 | 16.5 | 17.3 | 15.2 |
| | after 20 min (mm) | 30.1 | 30.5 | 34.2 | 20.1 | 24.2 | 24.5 |
| | Grade | P | P | P | P | P | P |
| *parts to 100 parts of acrylic polymer | | | | | | | |

As shown in Table 1 and Table 2, the PSA sheets according to Examples 1 to 11 and 17 to 22 having a PP rough surface peel strength of 0.30 N/20mm or greater exhibited excellent rough surface conformability in the peel test. Among them, Examples 17 to 22 using acrylic oligomers showed excellent PP rough surface peel strength; and from the results of the peel test, they exhibited greater rough surface conformability. The PSA sheets of these examples had each a fog preventability of 80 % or greater. Thus, in a closed space having a surface formed from a transparent material such as glass as typified by, for instance, interiors of automobiles, they are less likely to fog the transparent material. On the contrary, the PSA sheets according to Examples 12 to 14 each having a PP rough surface peel strength less than 0.30 N/20mm did not conform well to the rough surface. In Examples 15 and 16 each using a tackifier with a low softening point, while they showed increased rough surface conformability, their fog preventability decreased down below 80 %. The PSA sheets according to Examples 15 and 16 are suspected to cause fogging of a transparent material in a closed space as described above. With respect to Example 7, clouding was observed in the PSA. From these results, it can be seen that in addition to rough surface conformability and fog preventability, applications where the outer looks of PSA sheets are of importance require further attention to the type and amount of tackifier used, etc.

Although specific embodiments of the present invention have been described in detail above, these are merely for illustrations and do not limit the scope of the claims. The art according to the claims includes various modifications and changes made to the specific embodiments illustrated above.

[Reference Signs List]

1 substrate
1A first face (front face)
1B second face (back face)
2 PSA layer
2A adhesive face (PSA layer surface)
10 PSA sheet

**Claims**

1. A pressure-sensitive adhesive sheet comprising a substrate and a pressure-sensitive adhesive layer provided on one face of the substrate, wherein
   the pressure-sensitive adhesive layer has an adhesive face that exhibits a 180° peel strength of 0.30 N/20mm or greater to a polypropylene rough surface, and
   the pressure-sensitive adhesive sheet shows a fog preventability of 80 % or greater in a glass fogging test described below:

   [Glass Fogging Test]

   a circular pressure-sensitive adhesive sheet specimen of 80 mm diameter is placed in a glass vial having an opening of 85 mm inner diameter, a bottom of 80 mm inner diameter and a height of 190 mm; the glass vial containing the pressure-sensitive adhesive sheet specimen is placed in an oil bath (150 mm oil depth) at 100 °C, the opening of the glass vial is covered with a glass plate, and with a weight placed on the glass plate, it is left standing for two hours; before and after left standing, the glass plate is measured for reflectance to determine the fog preventability by an equation:

   $$\text{fog preventability (\%)} = (\text{reflectance of glass plate after left standing})/(\text{reflectance of glass plate before left standing}) \times 100$$

2. The pressure-sensitive adhesive sheet according to Claim 1, wherein the pressure-sensitive adhesive layer is an acrylic pressure-sensitive adhesive layer comprising an acrylic polymer as a base polymer.

3. The pressure-sensitive adhesive sheet according to Claim 1 or 2, wherein the base polymer in the pressure-sensitive adhesive layer has a glass transition temperature of -40 °C or lower.

4. The pressure-sensitive adhesive sheet according to any one of Claims 1 to 3, wherein the pressure-sensitive adhesive layer is formed with a pressure-sensitive adhesive composition comprising a crosslinking agent.

5. The pressure-sensitive adhesive sheet according to any one of Claims 1 to 4, wherein the pressure-sensitive adhesive layer comprises a tackifier having a softening point of 100 °C or higher.

6. The pressure-sensitive adhesive sheet according to any one of Claims 1 to 4, wherein the pressure-sensitive adhesive layer comprises an acrylic oligomer.

7. The pressure-sensitive adhesive sheet according to any one of Claims 1 to 6, wherein the pressure-sensitive adhesive layer has a thickness of 3 $\mu$m to 30 $\mu$m.

8. The pressure-sensitive adhesive sheet according to any one of Claims 1 to 7, wherein the substrate has a thickness of 20 $\mu$m to 100 $\mu$m.

9. The pressure-sensitive adhesive sheet according to any one of Claims 1 to 8 used as a surface protection sheet.

10. The pressure-sensitive adhesive sheet according to any one of Claims 1 to 9 used for protecting an automobile interior material.

[Fig. 1]

[Fig. 2]

(a)

(b)

**Europäisches Patentamt**
**European Patent Office**
**Office européen des brevets**

# EUROPEAN SEARCH REPORT

Application Number

EP 15 19 4668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI Week 200630 Thomson Scientific, London, GB; AN 2006-287243 XP002756000, & JP 2006 096895 A (NITTO DENKO CORP) 13 April 2006 (2006-04-13) * abstract * | 1-10 | INV. C09J7/02 |
| X | EP 1 661 962 A1 (NITTO DENKO CORP [JP]) 31 May 2006 (2006-05-31) * paragraph [0033] * * paragraph [0061] * * paragraph [0084] * | 1-10 | |
| X | WO 2005/080521 A1 (EASTMAN CHEM CO [US]) 1 September 2005 (2005-09-01) * abstract * * page 18, line 13 - line 25 * | 1-10 | |
| X | US 5 681 654 A (MAMISH ABBOUD L [US] ET AL) 28 October 1997 (1997-10-28) * claims * | 1,7-10 | TECHNICAL FIELDS SEARCHED (IPC) C09J |

The present search report has been drawn up for all claims

| Place of search | Date of completion of the search | Examiner |
|---|---|---|
| Munich | 1 April 2016 | Andriollo, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 4668

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2016

| Patent document cited in search report | | Publication date | Patent family member(s) | | Publication date |
|---|---|---|---|---|---|
| JP 2006096895 | A | 13-04-2006 | JP 4544953 B2 | | 15-09-2010 |
| | | | JP 2006096895 A | | 13-04-2006 |
| EP 1661962 | A1 | 31-05-2006 | CN 1782009 A | | 07-06-2006 |
| | | | EP 1661962 A1 | | 31-05-2006 |
| | | | JP 4969036 B2 | | 04-07-2012 |
| | | | JP 2006152128 A | | 15-06-2006 |
| | | | US 2006116455 A1 | | 01-06-2006 |
| | | | US 2011039988 A1 | | 17-02-2011 |
| WO 2005080521 | A1 | 01-09-2005 | CA 2555090 A1 | | 01-09-2005 |
| | | | CA 2555094 A1 | | 01-09-2005 |
| | | | EP 1716213 A1 | | 02-11-2006 |
| | | | EP 1716214 A1 | | 02-11-2006 |
| | | | JP 2007523250 A | | 16-08-2007 |
| | | | JP 2007523978 A | | 23-08-2007 |
| | | | WO 2005080520 A1 | | 01-09-2005 |
| | | | WO 2005080521 A1 | | 01-09-2005 |
| US 5681654 | A | 28-10-1997 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014234031 A
- JP 2012031420 A
- JP 2006152128 A
- JP 2006070242 A
- JP 2013521378 A
- JP 2007051271 A